(19) Europäisches Patentamt
European Patent Office
Office européen des brevets

(11) **EP 2 209 548 B1**

(12) **EUROPEAN PATENT SPECIFICATION**

(45) Date of publication and mention
of the grant of the patent:
**24.04.2013 Bulletin 2013/17**

(51) Int Cl.:
**B01F 17/00** (2006.01)

(21) Application number: **08845975.5**

(22) Date of filing: **28.10.2008**

(86) International application number:
**PCT/EP2008/064593**

(87) International publication number:
**WO 2009/056538 (07.05.2009 Gazette 2009/19)**

(54) **METHOD OF BUILDING VISCOSITY AND VISCOELASTICITY IN SURFACTANT SOLUTIONS BY ADDING NANOPARTICLES AND COMPOSITIONS THEREOF**

VERFAHREN ZUR VISKOSITÄTS- UND VISKOSITÄTSELASTIZITÄTSSTEIGERIUNG IN TENSIDLÖSUNGEN DURCH ZUGABE VON NANOPARTIKELN UND DEREN ZUSAMMENSETZUNGEN

PROCEDE DE RENFORCEMENT DE LA VISCOSITE ET DE LA VISCOELASTICITE DE SOLUTIONS TENSIOACTIVES PAR ADDITION DE NANOPARTICULES ET DE COMPOSITIONS EN CONTENANT

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.10.2007 US 1276**

(43) Date of publication of application:
**28.07.2010 Bulletin 2010/30**

(73) Proprietors:
• **Unilever PLC**
**London, Greater London EC4Y 0DY (GB)**
Designated Contracting States:
**CY GB IE MT**
• **Unilever N.V.**
**3013 AL Rotterdam (NL)**
Designated Contracting States:
**AT BE BG CH CZ DE DK EE ES FI FR GR HR HU IS IT LI LT LU LV MC NL NO PL PT RO SE SI SK TR**
• **University Of Delaware**
**Newark, DE 19716 (US)**

(72) Inventors:
• **WAGNER, Norman, John**
**Newark**
**Delaware 19711 (US)**
• **KALER, Eric, W.**
**Setauket**
**New York 11733 (US)**
• **NETTESHEIM, Florian**
**Wilmington**
**Delaware 19806 (US)**
• **HELGESON, Matthew, E.**
**Newark**
**Delaware 19702 (US)**
• **LIBERATORE, Matthew, W.**
**Colorado 80401 (US)**
• **ANANTHAPADMANABHAN, Kavssery, Parameswaran**
**Connecticut 06611 (US)**
• **VETHAMUTHU, Martin, Swanson**
**Connecticut 06611 (US)**
• **LIPS, Alexander**
**Wirral Merseyside CH63 3JW (GB)**

(74) Representative: **Fijnvandraat, Arnoldus**
**Unilever N.V.**
**Unilever Patent Group**
**Olivier van Noortlaan 120**
**3133 AT Vlaardingen (NL)**

(56) References cited:
**EP-A- 1 634 938       WO-A-03/059263**
**US-A1- 2005 107 265**

**(Cont. next page)**

- BANDYOPADHYAY R ET AL: "Effect of silica colloids on the rheology of viscoelastic gels formed by the surfactant cetyl trimethylammonium tosylate" JOURNAL OF COLLOID AND INTERFACE SCIENCE, ACADEMIC PRESS, NEW YORK, NY, US, vol. 283, no. 2, 15 March 2005 (2005-03-15), pages 585-591, XP004753440 ISSN: 0021-9797 cited in the application

- G. PETEKIDIS ET AL.: "Mixtures of Colloids and Wormlike Micelles: Phase Behaviour and Kinetics" LANGMUIR, vol. 18, 20 February 2002 (2002-02-20), pages 4248-4257, XP002514242
- P.A. HASSAN ET AL.: "diffusion of Probe particles in surfactant gels" J. PHYS. CHEM. B, vol. 102, 1998, pages 7120-7125, XP002514243

**Description**

FIELD OF THE INVENTION

The invention relates to surfactant solutions comprising cylindrical and/or worm-like micelles (e.g., cylindrical micelles form initially and develop into longer worm-like micelles as micelles aggregate). Micelles are assemblies of surfactant molecules which form above the critical micelle concentration. Preferably, but not necessarily, it relates to addition of nanoparticles to said micellar solution wherein, preferably, the nanoparticles have same charge as that of the surfactant micelles in solution, e.g., addition of cationically charged nanoparticles to cationic micelles in solution. More particularly, the invention relates to a method of building the network structure of such solutions, specifically by enhancing the viscosity of said solutions (viscosity enhancement being more pronounced in solutions that initially show near Newtonian behavior, i.e., solutions which exhibit linear response when plotting stress versus strain rate) and/or by creating or enhancing viscoelastic behavior of the solutions. The process allows formulation of solutions of controlled viscosity and/or viscoelasticity without requiring changes in the amount of surfactant, polymers, electrolytes, etc., i.e., control of structure and resulting rheology is accomplished by using nanoparticles (typically particles wherein at least one dimension of the particle, e.g., length or width, has size of 1 to 150 nanometers) instead.

BACKGROUND OF THE INVENTION

There are various ways of building viscosity (defined, for example, as steady state shear viscosity which is defined in the methods/definition section) or of creating or modifying viscoelasticity of a solution, viscoelasticity being defined in methodology/definition section.
For example, even in the absence of surfactants, it is possible to add polymers (e.g., thickeners) to affect the rheology of a fluid by adding new structural elements that provide, for example, thickening properties. It is noted that, according to the subject invention, viscosity and/or viscoelasticity are affected by modifying the existing structure of the surfactant in the solution (i.e., the fundamental structure of the micelle is not altered although nanoparticles help build up the microstructure though enhanced entanglements). As discussed below, this is accomplished by using particles small enough (in at least one dimension), and at a concentration low enough to not on their own enhance viscosity, so that the particles do not affect macro physiochemical properties of the solution.
In short, it is the combination of nanoparticles at low concentration and at same or neutral charge (not opposite charge) relative to surfactant micelles in solution which allows the particles to materially participate in the structuring of the micelles.
Viscosity and/or viscoelasticity of a solution, particularly a surfactant containing solution, can also be altered by adding additional surfactants, polymers, electrolytes, or acids and bases to the solution. In contrast to use of the nanoparticles of the invention (with properties and concentrations defined), addition of these ingredients typically does affect the rheology of the fluid by changing the fundamental structure of the surfactant micelle. This in turn may change the equilibrium phase behavior of the surfactant solution and typically limits product formulation (e.g., instability caused by phase separation).
Remarkably and unpredictably, applicants have found that it is possible to alter the viscosity (enhanced viscosity) and/or viscoelasticity (by either forming viscoelastic fluids from solution not previously viscoelastic and/or enhancing degree of viscoelasticity of a solution without requiring the need of additional surfactants, polymers, electrolyte, etc. as noted above). This is done by addition of nanoparticles, i.e., particles in the nanometer range (e.g., particles which, at least in one dimension, have size in 1-150, preferably 1-100, more preferably 5-80 nm, even more preferably 5-45 nm range) to the surfactant solution. Using such particles at concentration low enough to not affect viscosity and with charge neutral or preferably the same as that of the surfactant micelles in solution, it is possible to enhance viscosity and/or create or enhance viscoelasticity without accompanying change in phase morphology. That is, there is no change in the basic physiochemical properties of the surfactant solution. Preferably, solutions are cationic micellar solutions, and the nanoparticles used, whether inorganic or polymeric, have a charge the same as the charge of the surfactant micelles in the solution used.
The ability, for example, to control viscosity (e.g., steady state shear viscosity as defined in definition section) independent of viscoelastic behavior (measured, for example, by typical viscoelastic properties such as elastic modulus, G', viscous modulus G"; and relaxation time, $\lambda$) can be quite significant. That is, substantial increase in viscosity with only mild increase in elasticity (as seen in the examples), for example, enables formulation of solutions with independent control over viscosity and elasticity. This can be advantageous for specific consumer and/or industrial requirements. For example, high elasticity can be problematic in processing and handling of raw materials or in uses where flow instabilities can cause affects such as fluid fracture, aspiration or foaming. In addition, use of nanoparticles can substantially reduce the amount of surfactant needed to achieve desired elasticity or viscosity.
In general, the use of nanoparticles allows tremendous flexibility. Thus, suspensions with nanoparticles can be structured to have a specific rheology (e.g., viscosity and/or viscoelasticity) by building structure in the surfactant phase through the incorporation of such nanoparticles. While the structured fluids may break down under flow, they rapidly restructure upon reducing or ceasing flow to impart desired properties.

Applicants are aware of no references that disclose use of the specific nanoparticles (in size, concentration, and charge relative to charge of micelles in solution) to control rheology (viscosity and/or viscoelasticity) of surfactant solutions.

U.S. Patent No. 4,657,943; U.S. Patent No. 4,351,754 and U.S. Patent No. 7,132,468, are examples of compositions where polymers or colloidal particles are used to modify structure and viscosity of a fluid. There is no discussion or disclosure of nanoparticles used to modify surfactants to enhance viscosity; and/or to create and/or enhance viscoelasticity.

U.S. Patent No. 7,148,183, 7,105,153; and 7,084,095 disclose addition of polymers above and/or in combination with salts and acids/bases to modify structure or viscosity. Again, there is no disclosure of nanoparticles to modify surfactants and enhance viscosity and/or create and/or enhance viscoelasticity.

U.S. Patent No. 5,346,641 to Argo et al. discloses a thickened aqueous abrasive cleanser with improved colloidal stability. Particles disclosed are larger than one micron and there is no disclosure of nanometer size particles of the invention or their use as we describe above.

In an article in Journal of Colloid and Interface Science, Vol. 293, pp. 585-591 (2005), entitled, "Effect of Silica Colloids on the Rheology of Viscoelastic Gels Formed by the Surfactant Cetyl Trimethylammonium Tosylate", Bandyopadhyay et al. discuss the affect of silica colloids on the rheology of viscoelastic gels formed by this surfactant.

The silica particles used in the reference are opposite in charge to the surfactant micelles in the solution. Specifically, in that reference, sodium hydroxide is added to silica suspension to increase the surface charge of $SiO_2$ particles. No modifier is added to nanoparticles solids or suspension used in the subject invention. Further, in our invention, the charge of the particle is either neutral or same as the charge of the surfactant micelles in solution.

It is also noted that, at certain silica concentration, there is said to be a reduction in surfactant building structure and hence lower viscoeslasticity and viscosity (page 590, first column). This is opposite of our invention where the nanoparticles (as defined) structure micelles.

In an article in Langmuir, Vol. 18 (11), pp. 4248-4257, entitled "Mixtures of Colloids and Worm-Like in Micelles: Phase Behavior and Kinetics", Petekidis et al. disclose use of polystyrene particles and their effect in worm-like micelle systems. The particles used were substantially larger than the mesh size of worm-like micelles used (in our invention, preferably particles are smaller than mesh size of the micelles or micellar network) and, more importantly, the particles specifically were 190 nanometers in size, i.e., much larger than the size of particles of our invention.

Finally, applicants also wish to note a publication related to the application to Nettesheim et al. in Langmuir, Vol. 24, pp. 7718-7726, entitled "Influence of Nanoparticle Addition on the Properties of Worm-like Micellar Solutions: (published on Web July 12, 2008).

BRIEF DESCRIPTION OF THE INVENTION

Unexpectedly, applicants have now found a novel and quite unpredictable method for enhancing viscosity of surfactant solution which method comprises adding desired quantity (0.001-10% by wt., preferably 0.05-3% by wt.) of nanoparticles (e.g., having size, 1-150, preferably 1-100, more preferred 5-80 nm in at least one dimension) to said solution containing surfactant dissolved therein or to a solution containing undissolved surfactant. Preferably nanoparticles of like charge should be added to, for example, solutions containing cationic or anionic micelles. In preferred embodiments, the particles should be equal to or smaller than mesh size of micelles or of the micellar network forming the surfactant solution where they are added.

The invention further provides a method of establishing (assuming liquid is not previously viscoelastic) viscoelasticity and/or of enhancing viscoelastic behavior of surfactant solution which method comprise adding desired quantity of nanoparticles as noted above. Conditions relating to nanoparticles charge relative to the surfactant micelle in solution, and to size and concentration of particles are same as noted above.

In general, the invention provides a process for controlling viscosity and viscoelasticity of surfactant containing solutions by adding nanoparticles to the solution, in a method as described in claims 1, 6 and 13, in a composition as described in claim 16.

The invention further comprises compositions comprising micellar surfactant solutions which compositions comprise nanoparticles having charge (relative to charge of micelles in solution), size (in at least one dimension) and concentration as noted above.

BRIEF DESCRIPTION OF THE FIGURES

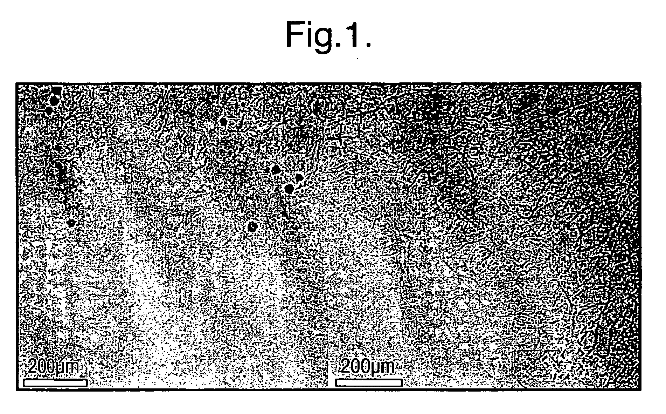

Figure 1 depicts structure of a solution containing 50 mM cetyltrimethylammonium bromide (CTAB) surfactant and 150 mM sodium nitrate salt (NaNO$_3$). The structure of the solution is viewed using cryogenic electron microscopy.

The panel on the right of Figure 1 is an image of fluid having no nanoparticles and depicts long, thread-like structures indicative of worm-like micelles (WLM).

The panel on the left is an image of fluid comprising 1% by volume nanoparticles. It contains thread-like structures and also contains sphere-like structures with diameters of about 30 nm indicative of the silica nanoparticles added therein.

The figure shows that the nanoparticles are evenly dispersed in the fluid and do not change the fundamental WLM character of the surfactant.

The scale bars used in each image are 200 nm.

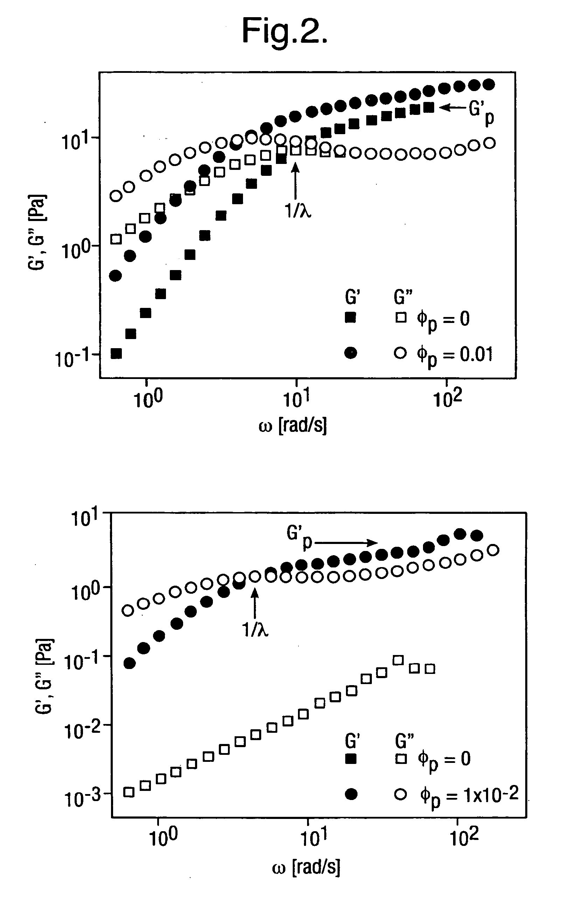

Figure 2 shows the elastic modulus G' (filled symbols) and viscous modulus G" (empty symbols) for WLM solution both without addition of nanoparticles (squares) and with addition of 1% by volume of nanoparticles (circles). The left panel shows data for micellar solution containing 150 mM CTAB and 200 mM NaNO$_3$. The right panel shows data for micelle solution containing 50 mM CTAB and 150 mM NaNO$_3$.

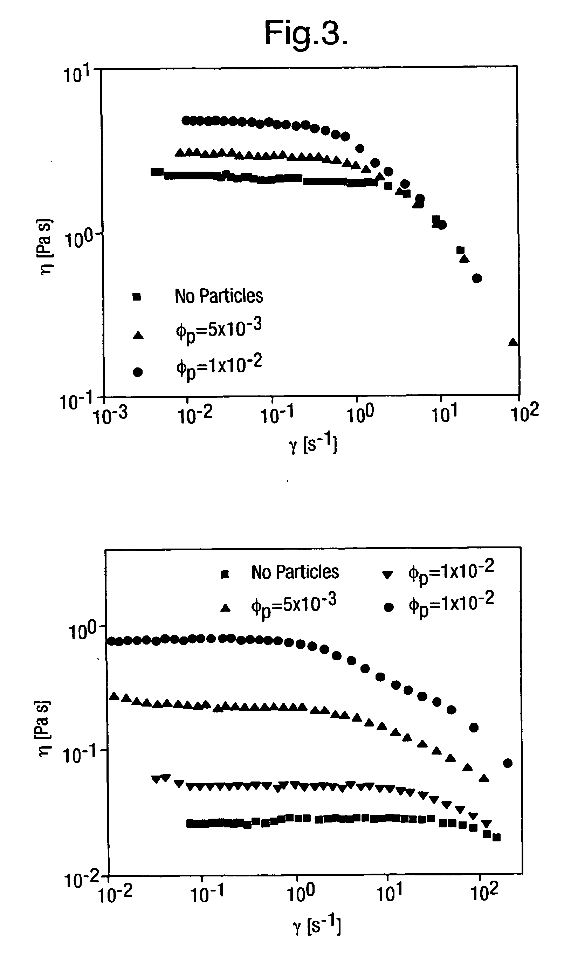

Figure 3 shows steady shear viscosity for WLM solution containing volume fraction $\phi_p$ of added particles noted. Left panel shows data for micellar solution containing 100 mM CTAB and 200 mM NaNO$_3$. Right panel shows data for a micellar solution containing 50 mM CTAB and 150 mM NaNO$_3$.

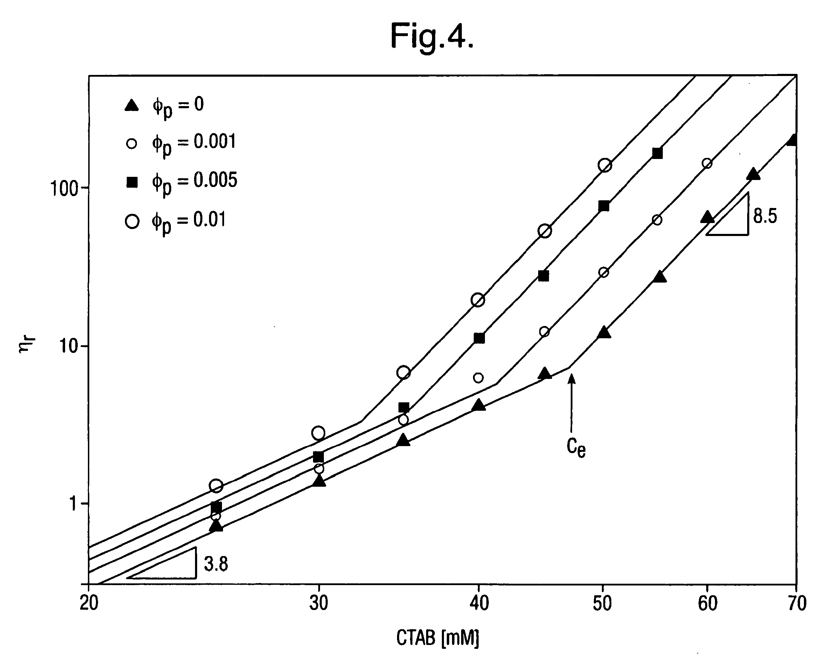

Figure 4 shows reduced zero rate viscosity for WLM solutions of varying CTAB concentration containing the volume fractions $\phi_p$ of silica nanoparticles indicated. Samples contain a fixed molar ratio of 1:3 CTAB:NaNO$_3$. Lines give power law fits of the reduced viscosity used to determine the critical entanglement concentration $c_e$.

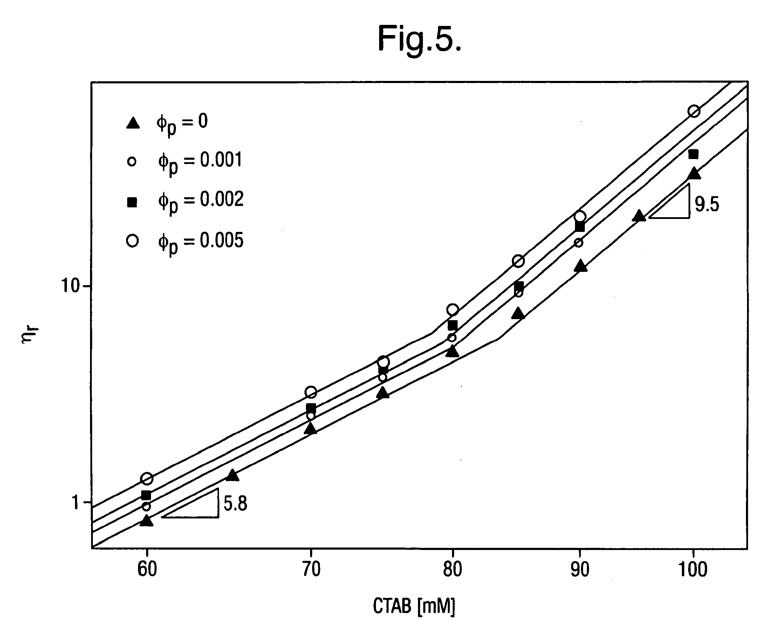

Figure 5 shows reduced zero shear rate viscosity for WLM solution of varying CTAB concentration containing the volume factors $\phi_p$ of latex nanoparticles indicated. Samples contain a fixed molar ratio of 1:1 CTAB: NaNO$_3$. Lines give power law fits of the reduced viscosity used to determine the critical entanglement concentration.

## DETAILED DESCRIPTION OF THE INVENTION

The present invention relates to a novel and unpredictable method of building surfactant structure in a surfactant solution in order to enhance viscosity of said solution and/or to create and/or enhance viscoelastic behavior of the solution. Specifically, the method comprises adding 0.001 to 10% by wt., as desired, of nanoparticles (e.g., particles 1-150 nm, preferably 1-100 nm in size in at least one dimension), depending on exactly what is the ultimate desired viscosity and/or viscoelasticity (which together help define the rheology of the fluid), to said solution containing surfactant dissolved therein or to a solution containing undissolved surfactant, wherein the charge of the nanoparticle is the some as or not opposite to the charge of the surfactant micelles in solution.

In one embodiment, the method comprises adding nanoparticles to a solution containing dissolved or undissolved surfactant to enhance viscosity (steady state viscosities whether measured at zero, low or medium shear rate). In a second embodiment, the method comprises adding nanoparticles to a solution containing dissolved or undissolved surfactant to form a viscoelastic liquid, (assuming it was not previously viscoelastic), as defined by elastic modulus, G', viscous modulus, G" and relaxation time, $\lambda$; or to enhance viscoelasticity of liquid which is already viscoelastic. Each of these terms is defined in the methodology/definition section.

In a third embodiment of the invention, the invention relates generally to a method of controlling viscosity and viscoelasticity of surfactant containing solution through use of nanoparticles. The method allows the formulator to determine precisely what properties he/she desires in the final liquid and to independently control variables such as viscosity and viscoelasticity to obtain desired properties for a given end use.

The invention further comprises micellar surfactant compositions which comprise nanoparticles used under the conditions noted (e.g., charge of particles relative to charge of micelles in solution, and concentration and size range of particles).

As indicated, in one embodiment the invention comprises adding nanoparticles to a surfactant solution to enhance viscosity and/or to create and/or enhance viscoelastic behavior. No additional surfactant or polymer is required to affect these changes and there is no change in the basic physiochemical property of the surfactant solution. This means that changes in rheology are affected without accompanying loss of stability or change in phase morphology and, as noted, without need to add soluble polymer, other surfactants, or electrolytes, acids or bases.

More specifically nanoparticles are added in desired quantity (0.001 to 10% by wt., depending on what viscosity or viscoelasticity ranges are desired by formulation) to a solution containing self-assembled surfactant micelles. The nanoparticles may be added to an existing surfactant solution or to a solution containing undissolved surfactant.

As for nanoparticles, they can be added either from a liquid suspension of the particles or as dry solid, as long as particles are evenly dispersed in the resulting mixture. Following addition, sufficient time is given to allow fluid to become well mixed. The mixing time and speed is not critical as long as it is sufficient to mix to form homogeneous solution. Resulting mixture is a fluid containing surfactant micelles and dispersed nanoparticles.

Generally, particles used in the field of nanotechnology may be defined as small objects that behave as a whole unit in terms of their transport and properties. They may further be classified according to size: In terms of diameter, fine particles cover a range between 100 and 2500 nanometers, while ultrafine particles, on the other hand, are sized between 1 and 100 nanometers. Similarly to ultrafine particles, nanoparticles are sized between 1 and 100 nanometers, though the size limitation can be restricted to two dimensions. Nanoparticles may or may not exhibit size-related intensive properties that differ significantly from those observed in fine particles or bulk materials.

Nanoparticles are also described by Cao, Guozhong in "Nanostructures and Nanomaterials - Synthesis, Properties and Applications", exhibited online at http://knovel.com (released July 6, 2006). The reference is hereby incorporated by reference into the subject application.

The nanoparticles of our invention have specific range of 1-150 nm, preferably 1-100, more preferably 5-80, most preferred 5-40 nm in at least one dimension, e.g., length or width. Thus, the particles can be spherical or cylindrical and not necessary of one shape. In one preferred embodiment, the particles are smaller than mesh size of the micelles or micellar structure or network with which they are used.

Examples of nanoparticles which may be used for our invention include silica or any other inorganic particles having required size. Polymeric nanoparticles may also be used.

Regarding surfactants, generally surfactant molecules self assemble in solution above the so called critical micelle concentration (CMC) into micelles. Often, these micelles grow into long, semi-flexible chains which are referred to as worm-like micelles (WLM). Micelles of the invention include cylindrical micelles, even if they have not yet formed longer worm-like micelles. Hydrotropic salts (salts with hydrophobic moiety) often induce rapid micellar growth due to their binding to micelles. As micelles entangle, they exhibit viscoelastic properties. When surfactant and/or salt concentrations increase further, entangled networks become branched and eventually may reach saturation point leading to phase separation.

Addition of various components typically leads to change in macroscopic property and phase behavior of the surfactant solution. These components used, however, are typically larger than the characteristic length scale of the micelle or micellar network (e.g., mesh size of the micelle). The particles of our invention are typically smaller than this mesh size, but more specifically, have size, in at least one dimension, of 1-150 nm as defined. The particles are also used at concentration low enough (0.001 to 10% by wt.) not to influence viscosity on their own.

As noted, in using these particles, we have unexpectedly found it is possible to influence rheology without affecting fundamental macroscopic property of the surfactant solution.

There is no real criticality as to which type of surfactants may be used Preferably, however, the charge of the nanoparticles used should be the same as that of the charge of the surfactant in the surfactant solution. Thus, for example, preferred embodiments include cationically charged nanoparticle in a solution comprising cationic micelles, or anionically charged nanoparticles in solution comprising anionic micelles. Although the charge may be neutral relative to charge of the micelles in solution, the charge should not be the opposite of the charge of the micelles in solution.

The invention, in short, is directed really to use of nanoparticles to affect viscosity, viscoelasticity, etc. Whether the surfactant solution comprises anionic surfactants, amphoteric surfactants, zwitterionic surfactants, nonionic surfactants, cationic surfactants or mixtures of any of these, the invention is directed to the rheological properties of the resulting surfactant solution and how to control these through use of nanoparticles (specific in their size, concentration and charge relative to the surfactant micelles in solution).

It is noted that the range of surfactant in solution is not critical and the solution can have ranges of 1 to 90% by wt. surfactant. Typically, surfactant compositions range from 5-80%, preferably 10-50% by wt. The invention can be used in high or low surfactant concentration liquids.

In examples of how the invention works, micellar surfactant solutions exhibit viscoelastic behavior defined by an elastic modulus, $G'_p$ and characteristic relaxation time $\lambda$. When nanoparticles of invention are added to such solutions, the resulting solution may either show a significant increase in relaxation time and modest increase in elastic modulus (resulting in significant increase in steady state shear rate viscosity of the fluid); or, alternatively, if the micellar solution has low, nearly Newtonian viscosity and no measurable viscoelasticity, addition of particles can cause the solution to now exhibit substantial viscoelasticity, as measured by a plateau modulus and characteristic relaxation time when the particles are added.

EXAMPLES

Definitions/Protocol

Steady State Shear Viscosity Definition

In each geometry, the steady shear rate imposed on the fluid depends on a driving velocity and the dimensions of the geometry. For sliding plate device, shear rate $\gamma$ is the velocity V of the moving plate (the other plate being held stationery), divided by the gap h between the plates; hence $\gamma = V/h$. In cone and plate geometry, $\gamma = \Omega/\tan\alpha$, were $\Omega$ is the steady angular rotation speed of the cone or plates (whichever is rotating) or is the core angle, usually less than or equal to 0.10 radian.

Shear stress σ is the force that a flowing liquid exerts on a surface, per unit area of that surface, in the direction parallel to the flow. The shear viscosity η is then defined as

$$\eta = \sigma/\gamma$$

After a steady shearing flow has been imposed on a flow for a suitable period of time, the shear stress often (but not always) comes to a steady state, σ (γ), which depends on the imposed shear rate γ. The rate of the steady shear stress σ to the shear rate γ is the steady state shear viscosity.

Relaxation time Definition

Viscoelastic materials comprise a wide variety of materials which will snap back after being stressed but lose a rather significant amount of energy along the way. A consequence of this energy loss is that there is a time lag between when the stress is released and when the material fully snaps back - defining a relaxation time (lambda) in the material. This relaxation time is an important parameter because it defines a boundary between a solid-like response (like tearing or cracking) and a fluid like response (like flow). Some typical "everyday" examples of viscoelastic materials would be: toothpaste, gelatin, the earth's mantle, and blood clots.

Viscoelasticity

Viscoelasticity, also known as an elasticity, is the study of materials that exhibit both viscous and elastic characteristics when undergoing deformation. Viscous materials, like honey, resist shear flow and strain linearly with time when a stress is applied. Elastic materials strain instantaneously when stretched and just as quickly return to their original state once the stress is removed. Viscoelastic materials have elements of both of these properties and, as such, exhibit time dependent strain. Whereas elasticity is usually the result of bond stretching along crystallographic planes in an ordered solid, viscoelasticity is the result of the diffusion of atoms or molecules inside of an amorphous material. Viscoelasticity calculations depend heavily on the viscosity variable η, which is defined above.

Depending on the change of strain rate versus stress inside a material the viscosity can be categorized as having a linear, non-linear, or plastic response. When a material exhibits a linear response it is categorized as a Newtonian material. In this case the stress is linearly proportional to the strain rate. If the material exhibits a non-linear response to the strain rate, it is categorized as Non-Newtonian fluid. There is also an interesting case where the viscosity decreases as the shear/strain rate remains constant. A material which exhibits this type of behavior is known as thixotropic. In addition, when the stress is independent of this strain rate, the material exhibits plastic deformation. Many viscoelastic materials exhibit rubber like behavior explained by the thermodynamic theory of polymer elasticity.

Some examples of viscoelastic materials include amorphous polymers, semi-crystalline polymers, bipolymers, biopolymers, and metals at very high temperatures. Cracking occurs when the strain is applied quickly and outside of the elastic limit.

A viscoelastic material has the following properties:

- hysteresis is seen in the stress-strain curve.
- stress relaxation occurs: step constant strain causes decreasing stress
- creep occurs: step constant stress causes increasing strain

Unlike purely elastic substances, a viscoelastic substance has an elastic component and a viscous component. The viscosity of a viscoelastic substance gives the substance a strain rate dependent on time. Purely elastic materials do not dissipate energy (heat) when a load is applied, then removed. However, a viscoelastic substance loses energy when a load is applied, then removed. Hysteresis is observed in the stress-strain curve, with the area of the loop being equal to the energy lost during the loading cycle. Since viscosity is the resistance to thermally activated plastic deformation, a viscous material will lose energy through a loading cycle. Plastic deformation results in lost energy, which is uncharacteristic of a purely elastic material's reaction to a loading cycle.

Specifically, viscoelasticity is a molecular rearrangement. When a stress is applied to a viscoelastic material such as a polymer, parts of the long polymer chain change position. This movement or rearrangement is called Creep. Polymers remain a solid material even when these parts of their chains are rearranging in order to accompany the stress, and as this occurs, it creates a back stress in the material. When the back stress is the same magnitude as the applied stress, the material no longer creeps. When the original stress is taken away, the accumulated back stresses will cause the polymer to return to its original form. The material creeps, which gives the prefix visco-, and the material fully recovers, which gives the suffix -elasticity.

There are several types of viscoelasticity. Linear viscoelasticity is when the function is separable in both creep response and load. All linear viscoelastic models can be represented by the Volterra equation connecting stress to strain. Nonlinear viscoelasticity is when the function is not separable. It usually happens when the deformations are large or if the material changes its properties under deformations.

Viscoelasticity is studied using dynamic mechanical analysis. When we apply a small oscillatory strain and measure the resulting stress

- Purely elastic materials have stress and strain in phase, so that the response of one caused by the other is immediate.
- In purely viscous materials, strain lags stress by a 90 degree phase lag.
- Viscoelastic materials exhibit behavior somewhere in the middle of the two types of material, exhibiting some lag in strain.

Complex Dynamic modulus G can be used to represent the relations between the oscillating stress and strain:

$$G = G' + iG''$$

Where $i = sqrt(-1)$; $G'$ is the elastic or storage modulus and $G''$ is the viscous or loss modulus:

$$G' = \frac{\sigma_0}{\varepsilon_0} \cos \delta$$

$$G'' = \frac{\sigma_0}{\varepsilon_0} \sin \delta$$

where $\sigma_0$ and $\varepsilon_0$ are the amplitudes of stress and strain and $\delta$ is the phase shift between them.

Viscosity and elasticity measurements

Generally speaking, rheological measurements are normally performed in kinematic instruments in order to get quantitative results useful for design and development of products and process equipment. For design of products, e.g. in the food, cosmetic or paint industry, rheometric measurements are often performed to establish the elastic properties, such as gel strength and yield value, both important parameters affecting e.g. particle carrying ability and spreadability. For design of process equipment the properties during shearing of the product is of prime interest. Those properties are established in a normal viscosity measurement.

A rheometric measurement normally consists of a strain (deformation) or a stress analysis at a constant frequency (normally 1 Hz) combined with a frequency analysis, e.g. between 0.1 and 100 Hz. The strain sweep gives information of the elastic modulus G', the viscous modulus G" and the phase angle Δ. A large value of G' in comparison of G" indicates pronounced elastic (gel) properties of the product being analyzed. For such a product the phase angle is also small, e.g. 20° (a phase angle of 0° means a perfectly elastic material and a phase angle of 90° means a perfectly viscous material). The frequency sweep gives information about the gel strength where a large slope of the G' curve indicates low strength and a small slope indicates high strength.

In the subject invention, rheological characterization was performed on a TA Instruments G2 Rheometer with a 60 mm, 1° standard cone and plate geometry using a lower Peltier heated plate at 25°C. The linear viscoelastic moduli G' (elastic modulus, filled symbols) and G" (viscous modulus, empty symbols) were measured as a function of applied frequency $\omega$ at a strain amplitude of 5%. The steady state shear viscosity $\eta$ was also measured as a function of the applied shear rate $\gamma$. Figures 2 and 3 show mechanical measurements of the linear viscoelastic moduli and shear viscosity, respectively, for two fluids produced by the addition of nanoparticles (circles) as compared to fluids containing the same surfactant and salt concentrations but with no nanoparticles (squares).

Samples for cryo transmission electron microscopy (cryo-TEM) were examined using a Techni 12 transmission electron microscope at an acceleration voltage of 120 keV. Specimens were prepared using a Vitrobot Mark II instrument. Quantifoil grids were submerged in the liquid sample, blotted to produce a thin liquid film, and allowed adequate relaxation time before vitrification in liquid ethane held at its freezing temperature. Grids were held below - 170°C during investigation in the transmission electron microscope, and images were recorded using a Gatan multiscan charge-coupled device (CCD) camera and processed with Digital Micrograph software.

Example 1

In order to show that addition of nanoparticles does not change the fundamental worm-like micelle (WLM) structure of the surfactant, applicants conducted the following example.

50 millimolar (mM) cetyltrimethylammonium bromide (CTAB, ex. Aldrich Chemical), 150 mM sodium nitrate salt ($NaNO_3$) and 0.1% by volume silica nanoparticles (30cal25, AZ Electronic Materials) were prepared in solution. The solution was prepared by first adding 0.383 grams (g) (1.31 wt. %) of dry $NaNO_3$ powder and 0.547 g (1.87 wt. %) of dry CTAB powder to a sample vial. Subsequently, 28.090 g (96.10 wt. %) of de-ionized water was added as a solvent to the mixture, as well as 0.211 g (0.72 wt. %) of a stock suspension of silica nanoparticles. The stock suspension provided by the manufacturer contains approximately 30% by volume of silica nanoparticles. The silica nanoparticles contained in the suspension are approximately 30 nanometers (nm) in diameter as measured by dynamic light scattering, and have a positive surface charge yielding a zeta potential of +10 millivolts as determined by electrophoretic mobility measurements. Upon addition of all components to the mixture, the sample vial was sealed and mixed by hand to allow even mixing of the solid components, and subsequently allowed to mix for 24 hours at room temperature.

Applicants observed a series of 100 mM CTAB and 100 mM $NaNO_3$ surfactant solutions with and without nanoparticles at 25°C. Solutions were prepared using CTAB, $NaNO_3$ and deionized water where MW of CTAB is 364.5 g/mol and MW $NaNO_3$ is 85.0 g/mol. The solution without nanoparticles was observed to be clear and one phase. A solution with 1% by volume of nanoparticles was also observed to be homogeneous and showed a slight increase in turbidity and appeared bluish, as expected since the particles are known to scatter light. A solution with 5% by volume of particles was non-homogeneous and appeared highly turbid and white, since the particles aggregate and thereby scatter light more significantly. The structures of surfactant solutions with and without nanoparticles was imaged through the use of cryogenic electron microscopy, as shown in Figure 1. The image of the fluid containing no nanoparticles showed long, threadlike structures indicative of worm-like micelles. The image of the fluid containing 1% by volume of nanoparticles also contained threadlike structures, as well as sphere-like structures with diameters of approximately 30 nm indicative of the silica nanoparticles. This shows that the nanoparticles are evenly dispersed in the fluid, and that they do not change the fundamental WLM character of the surfactant.

Example 2

To show enhancement in viscosity ($\eta_o$ measured in Pa.s) and in viscoelasticity (measured by $G_p'$ and $\lambda$ values as seen in Table 1), applicants conducted the following examples:

A solution containing 100 nM CTAB and 200 mM $NaNO_3$ (left panel of Figure 2, first two lines of Table 1) prepared without nanoparticles. These were prepared by adding 0.334 g (1.66 wt. %) $NaNO_3$ and 0.730 g (3.62 wt. %) CTAB to vial and subsequently adding 19.110 g (94.72 wt. %) deionized water. The solution exhibits a significant elastic modulus as well as a long relaxation time, as evident by the plateau in G' at high frequencies and intersection of G' and G" at moderate frequencies, respectively. The addition of 1% by volume of silica nanoparticles to this fluid using the invented method as described results in a material with a 55% increase in elastic modulus and a 120% increase in relaxation time (increase from 0.10 to 0.22 in relaxation and from 18 to 23 in elastic modulus G' seen in Table 1). In contrast, a solution containing 50 mM CTAB and 150 mM $NaNO_3$ (left panel of Figure 2, last two lines of Table 1) prepared without nanoparticles exhibits no significant elasticity. However, when 1% by volume of silica nanoparticles are added to the fluid using the invented method, the fluid displays significant viscoelasticity as evident by the existence of a high elastic modulus and long relaxation time (G' = 2.5 Pa; $\lambda$ = 0.25 S).

Similarly, both surfactant solutions show increases in the steady shear viscosity upon addition of nanoparticles (Figure 3). The increase in viscosity is shown to increase with increasing concentration of nanoparticles, and is more pronounced for surfactant solutions that initially show nearly Newtonian behavior indicated by a nearly constant shear viscosity at all shear rates. For example, the 100 mM CTAB solution shows an increase in the steady state shear rate viscosity of the fluid of approximately 120%, ($\eta_o$ from 2.1 to 4.5 Pa.s) whereas the 50 mM CTAB solution shows an increase in the zero-shear viscosity of the fluid of over twenty-fold (0.03 to 0.75 Pa.s) upon addition of 1% by volume of nanoparticles (see Table 1).

Table 1 is set forth below:

Table 1. Viscoelastic properties of WLMs using the invented method

| Solution contents | Nanoparticle concentration | $G'_p$ [Pa] (elastic modulus) | $\lambda$ [s] (relaxation) | $\eta_o$[Pa.s] |
|---|---|---|---|---|
| 50mM CTAB | No particles | n/a* | n/a* | 0.03 |
| 150 mM NaNO$_3$ | $\phi_p$=0.01 | 2.5 | 0.25 | 0.75 |
| 100 mM CTAB | No particles | 18 | 0.10 | 2.1 |
| | | | | |
| 200 mM NaNO$_3$ | $\phi_p$=0.01 | 23 | 0.22 | 4.5 |
| * - Less than can be accurately measured using standard techniques. | | | | |

Example 3

A series of solutions containing a constant molar ratio of 1:3 CTAB:NaNO$_3$ were prepared with concentrations of silica nanoparticles ranging from 0% to 1% by volume. The zero-shear rate viscosity, $\eta_0$, of each sample was measured at 25°C using an Anton Paar AMVn rolling ball viscometer using a 1.8 mm capillary. The results were used to calculate the reduced zero-shear rate viscosity, $\eta_r = \eta_0/\eta_s$ -1, where $\eta_s$ is the viscosity of the solvent (for water, $\eta_s$ was measured to be 0.0086 Pas). In the absence of silica nanoparticles, $\eta_r$ increases with surfactant concentration according to power law behavior Figure 4), where the power law exponent increases at a critical entanglement concentration (denoted by $c_e$ in the figure). As shown in the previous examples, compositions below $c_e$ exhibit low viscosity and nearly Newtonian behavior under shear whereas compositions above $c_e$ exhibit significant viscoelasticity and shear thinning.

Upon addition of silica nanoparticles, the surfactant concentration at which $c_e$ occurs is shown to decrease with increasing concentration of silica nanoparticles (Figure 4). This is in agreement with the previous examples, which show that addition of nanoparticles to a 50 mM CTAB, 150 mM NaNO$_3$ solution (below $c_e$) results in development of significant viscoelasticity. At the same time, the zero-shear rate viscosity increases by an amount that is proportional to the concentration of silica nanoparticles in the sample, regardless of whether the solution is below or above $c_e$. This effect is summarized in Table 2, which tabulates $c_e$, as well as the average increase in viscosity relative to the reduced viscosity without nanoparticles, $\eta_r(\phi_p)/\eta_r(\phi_p=0)$, upon the addition of a specified amount of nanoparticles. The average viscosity increase is observed to be greater for surfactant concentrations greater than the value of $c_e$ for the corresponding particle concentration.

To demonstrate the robustness of the invented method for added nanoparticles with different size, composition, and surface chemistry, a series of solutions containing a constant molar ratio of 1:1 CTAB:nANO$_3$ were prepared with various concentrations of amidized latex nanoparticles (3-60 amidine latex, Interfacial Dynamics Corporation) nanoparticles ranging from 0% to 0.5% by volume. The reduced zero-shear rate viscosity of the samples was determined similar to the samples with silica nanoparticles, and the results are shown in Figure 5. As with the silica nanoparticles, addition of the latex nanoparticles results in an increase in $\eta_r$ relative to that with no added nanoparticles, as well as a decrease in $c_e$ with increasing nanoparticle concentration. Similarly, the average viscosity increase upon nanoparticle addition is greater above $c_e$ than below $c_e$. These results are summarized in Table 2 for different concentrations of the amidine latex nanoparticles.

In summary, the invention is a method by which:

a) the addition of nanoparticles to a viscoelastic micellar solution results in a substantial increase in steady state shear rate viscosity (e.g., zero shear rate viscosity) and relaxation time and a modest increase in elastic modulus, and

b) the addition of nanoparticles to a low viscosity, nearly Newtonian micellar results in significant viscoelasticity and large increases in, for example, zero shear rate viscosity, which is concomitant with a decrease in the critical entanglement concentration for the solution.

Table 2 - Enhancement of viscosity using the invented method*

| Type of nanoparticle | Nanoparticle concentration | Entanglement concentration, Ce (mM CTAB) | Normalized viscosity increase (below $c_e$) | (above $c_e$) |
|---|---|---|---|---|
| 30cal25 silica* | No particles | 47.0 | 1 | 1 |
| | $\phi_p$ = 0.001 | 41.3 | 1.6 | 2.3 |

(continued)

| Type of nanoparticle | Nanoparticle concentration | Entanglement concentration, Ce (mM CTAB) | Normalized viscosity increase (below $c_e$) | (above $c_e$) |
|---|---|---|---|---|
| | $\phi_p = 0.005$ | 35.0 | 2.1 | 6.1 |
| | $\phi_p = 0.01$ | 32.5 | 2.9 | 10.4 |
| 3-20 amidine latex** | No particles | 83.4 | 1 | 1 |
| | $\phi_p = 0.001$ | 79.9 | 1.2 | 1.4 |
| | $\phi_p = 0.002$ | 79.1 | 1.3 | 1.6 |
| | $\phi_p = 0.005$ | 78.6 | 1.5 | 1.9 |

* - for molar ratio of 1:3 $CTAB:NaNO_3$
**-for a molar ratio of 1:1 $CTAB:NaNO_3$

**Claims**

1. A method for enhancing viscosity of micellar surfactant solution comprising micelles or micellar structure of said surfactant which method comprises adding 0.001-10% by wt. nanoparticles having size, in at least one dimension, of 1-150 nanometers to said solution containing surfactant dissolved therein or to solution containing undissolved surfactant, wherein the charge of the nanoparticle is the same as or not opposite to the charge of the surfactant micelles in solution.

2. A method according to claim 1, wherein said nanoparticles are inorganic or polymeric nanoparticles.

3. A method according to claim 1, wherein said inorganic particles are silica particles.

4. A method according to claim 1, wherein said particles have size of 1-100 nm.

5. A method according to claim 1, wherein the micelles or micellar structure are of a defined mesh size and the nanoparticles are equal in size or smaller than the mesh size of said micelles or micellar solution.

6. A method for establishing or enhancing viscoelastic behavior of micellar surfactant solution comprising micelles or micellar structure of said surfactant which method comprise adding 0.001-10% by wt. nanoparticles having size, in at least one dimension, of 1-150 nanometers to said solution containing surfactant dissolved therein or to solution containing undissolved surfactant, wherein the charge of the nanoparticle is the same as or not opposite to the charge of the surfactant micelles in solution.

7. A method according to claim 6, wherein said nanoparticles are inorganic or polymeric nanoparticles.

8. A method according to claim 6, wherein said inorganic particles are silica particles.

9. A method according to claim 6, wherein said particles have size of 1-100 nm.

10. A method according to claim 6, wherein the charge of the nanoparticle is the same as that of the charge of the surfactant micelles in solution.

11. A method according to claim 6, wherein the charge of the nanoparticles is not opposite to that of the surfactant micelles in solution.

12. A method according to claim 6, wherein the micelles or micellar structure are of a defined mesh size and the nanoparticles are equal in size or smaller than the mesh size of said micelles or micellar solution.

13. A method of controlling viscosity and viscoelasticity of a micellar surfactant solution comprising micelles or micellar structure of said surfactant which method comprises adding 0.001-10% by wt. nanoparticles having size, in at least one dimension, of 1-150 nanometers to said solution containing surfactant dissolved therein or to solution containing undissolved surfactant.

14. A surfactant solution comprising micelle or micellar structure of said surfactant and further comprising 0.001-10% by wt. nanoparticles having size, in at least one dimension, of 1-150 nanometer, wherein said nanoparticles do not have charge which is opposite to charge of the surfactant micelles in solution.

15. A solution according to claim 14 wherein the micelles or micellar structure are of a defined mesh size and the nanoparticles are equal in size or smaller than the mesh size of said micelles or micellar solution.

**Patentansprüche**

1. Verfahren zum Erhöhen der Viskosität einer Lösung von Tensidmizellen, die Mizellen oder eine Mizellstruktur des Tensids aufweist, wobei das Verfahren das Zugeben von 0,001 bis 10 Gew.-% Nanopartikel, die bei zumindest einer Abmessung eine Größe von 1 bis 150 nm aufweisen, zu dieser Lösung, die ein darin gelöstes Tensid enthält, oder zu einer Lösung aufweist, die ein ungelöstes Tensid enthält, wobei die Ladung der Nanopartikel gleich der Ladung der Tensidmizellen in der Lösung oder dieser nicht entgegengesetzt ist.

2. Verfahren nach Anspruch 1,
wobei die Nanopartikel anorganische oder polymere Nanopartikel sind.

3. Verfahren nach Anspruch 1,
wobei die anorganischen Partikel Siliciumdioxidpartikel sind.

4. Verfahren nach Anspruch 1,
wobei die Partikel eine Größe von 1 bis 100 nm haben.

5. Verfahren nach Anspruch 1,
wobei die Mizellen oder die Mizellstruktur eine definierte Siebgröße haben und die Größe der Nanopartikel gleich oder kleiner als die Siebgröße dieser Mizellen oder Mizellösung ist.

6. Verfahren zum Einbringen oder Verbessern des Viskoelastizitätsverhaltens einer Lösung von Tensidmizellen, die Mizellen oder eine Mizellstruktur des Tensids aufweist, wobei das Verfahren folgendes aufweist: Zugeben von 0,001 bis 10 Gew.-% Nanopartikel, die bei zumindest einer Abmessung eine Größe von 1 bis 150 nm aufweisen, zu dieser Lösung, die ein darin gelöstes Tensid enthält, oder zu einer Lösung aufweist, die ein ungelöstes Tensid enthält, wobei die Ladung der Nanopartikel gleich der Ladung der Tensidmizellen in der Lösung oder dieser nicht entgegengesetzt ist.

7. Verfahren nach Anspruch 6,
wobei die Nanopartikel anorganische oder polymere Nanopartikel sind.

8. Verfahren nach Anspruch 6,
wobei die anorganischen Partikel Siliciumdioxidpartikel sind.

9. Verfahren nach Anspruch 6,
wobei die Partikel eine Größe von 1 bis 100 nm haben.

10. Verfahren nach Anspruch 6,
wobei die Ladung der Nanopartikel die gleiche wie die Ladung der Tensidmizellen in der Lösung ist.

11. Verfahren nach Anspruch 6,
wobei die Ladung der Nanopartikel der der Tensidmizellen in der Lösung nicht entgegengesetzt ist.

12. Verfahren nach Anspruch 6,
wobei die Mizellen oder die Mizellstruktur eine definierte Siebgröße haben und die Größe der Nanopartikel gleich oder kleiner als die Siebgröße dieser Mizellen oder Mizellösung ist.

**13.** Verfahren zum Steuern der Viskosität und der Viskoelastizität einer Lösung von Tensidmizellen, die Mizellen oder eine Mizellstruktur des Tensids aufweist, wobei das Verfahren das Zugeben von 0,001 bis 10 Gew.-% Nanopartikel, die bei zumindest einer Abmessung eine Größe von 1 bis 150 nm haben, zu dieser Lösung, die ein darin gelöstes Tensid enthält, oder zu einer Lösung aufweist, die ein ungelöstes Tensid enthält.

**14.** Tensidlösung, die Mizellen oder eine Mizellstruktur des Tensids und ferner 0,001 bis 10 Gew.-% Nanopartikel aufweist, die bei zumindest einer Abmessung eine Größe von 1 bis 150 nm haben, wobei Nanopartikel keine Ladung haben, die der Ladung der Tensidmizellen in der Lösung entgegengesetzt ist.

**15.** Lösung nach Anspruch 14,
wobei die Mizellen oder die Mizellstruktur eine definierte Siebgröße haben und die Größe der Nanopartikel gleich oder kleiner als die Siebgröße dieser Mizellen oder Mizellösung ist.


**Revendications**

**1.** Méthode permettant d'améliorer la viscosité d'une solution de tensioactif micellaire contenant des micelles ou une structure micellaire dudit tensioactif, ladite méthode comprenant l'ajout de 0,001 % à 10 % en poids de nanoparticules possédant une taille, dans au moins une dimension, de 1 à 150 nanomètres à ladite solution dans laquelle un tensioactif est dissous ou à une solution contenant un tensioactif non dissous, dans laquelle la charge de la nanoparticule est identique ou non opposée à la charge des micelles de tensioactif dans la solution.

**2.** Méthode selon la revendication 1, dans laquelle lesdites nanoparticules sont des nanoparticules inorganiques ou polymériques.

**3.** Méthode selon la revendication 1, dans laquelle lesdites particules inorganiques sont des particules de silice.

**4.** Méthode selon la revendication 1, dans laquelle lesdites particules possèdent une taille de 1 nm à 100 nm.

**5.** Méthode selon la revendication 1, dans laquelle les micelles ou la structure micellaire ont une grosseur de grain définie et les nanoparticules ont des tailles identiques ou inférieures à la grosseur de grain desdites micelles ou de ladite solution micellaire.

**6.** Méthode permettant d'établir ou de renforcer le comportement viscoélastique d'une solution de tensioactif micellaire contenant des micelles ou une structure micellaire dudit tensioactif, ladite méthode comprenant l'ajout de 0,001 % à 10 % en poids de nanoparticules possédant une taille, dans au moins une dimension, de 1 à 150 nanomètres à ladite solution dans laquelle un tensioactif est dissous ou à une solution contenant un tensioactif non dissous, dans laquelle la charge de la nanoparticule est identique ou non opposée à la charge des micelles de tensioactif dans la solution.

**7.** Méthode selon la revendication 6, dans laquelle lesdites nanoparticules sont des nanoparticules inorganiques ou polymères.

**8.** Méthode selon la revendication 6, dans laquelle lesdites particules inorganiques sont des particules de silice.

**9.** Méthode selon la revendication 6, dans laquelle lesdites particules possèdent une taille de 1 nm à 100 nm.

**10.** Méthode selon la revendication 6, dans laquelle la charge de la nanoparticule est identique à la charge des micelles de tensioactif dans la solution.

**11.** Méthode selon la revendication 6, dans laquelle la charge des nanoparticules n'est pas opposée à celle des micelles de tensioactif dans la solution.

**12.** Méthode selon la revendication 6, dans laquelle les micelles ou la structure micellaire ont une grosseur de grain définie et les nanoparticules ont des tailles identiques ou inférieures à la grosseur de grain desdites micelles ou de ladite solution micellaire.

**13.** Méthode permettant de contrôler la viscosité et la viscoélasticité d'une solution de tensioactif micellaire contenant des micelles ou une structure micellaire dudit tensioactif, ladite méthode comprenant l'ajout de 0,001 % à 10 % en poids de nanoparticules possédant une taille, dans au moins une dimension, de 1 à 150 nanomètres à ladite solution dans laquelle un tensioactif est dissous ou à une solution contenant un tensioactif non dissous.

14. Solution de tensioactif contenant des micelles ou une structure micellaire dudit tensioactif et contenant en outre 0,001 % à 10 % en poids de nanoparticules possédant une taille, dans au moins une dimension, de 1 à 150 nanomètres, lesdites nanoparticules ne possédant pas une charge qui est opposée à la charge des micelles de tensioactif dans la solution.

15. Solution selon la revendication 14, dans laquelle les micelles ou la structure micellaire ont une grosseur de grain définie et les nanoparticules ont des tailles identiques ou inférieures à la grosseur de grain desdites micelles ou de ladite solution micellaire.

# Fig.1.

# Fig.2.

## Fig.3.

Fig.4.

# Fig.5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4657943 A
- US 4351754 A
- US 7132468 B
- US 7148183 B
- US 7105153 B
- US 7084095 B
- US 5346641 A, Argo

### Non-patent literature cited in the description

- *Journal of Colloid and Interface Science,* 2005, vol. 293, 585-591
- **PETEKIDIS.** Mixtures of Colloids and Worm-Like in Micelles: Phase Behavior and Kinetics. *Langmuir,* vol. 18 (11), 4248-4257
- **NETTESHEIM et al.** Influence of Nanoparticle Addition on the Properties of Worm-like Micellar Solutions. *Langmuir,* 12 July 2008, vol. 24, 7718-7726
- **CAO, GUOZHONG.** *Nanostructures and Nanomaterials - Synthesis, Properties and Applications,* 06 July 2006, http://knovel.com